# EUROPÄISCHE PATENTSCHRIFT

(11) **EP 3 277 473 B1**
(45) Veröffentlichungstag und Bekanntmachung des Hinweises auf die Patenterteilung: **24.03.2021**
(21) Anmeldenummer: 16714810.5
(22) Anmeldetag: 24.03.2016
(51) Int. Cl.: B29B 15/12, B29C 70/52

(54) **VERFAHREN ZUR HERSTELLUNG EINES FASERVERBUNDWERKSTOFFS**
METHOD FOR PRODUCING A FIBRE COMPOSITE MATERIAL
PROCÉDÉ POUR PRODUIRE UN MATÉRIAU COMPOSITE FIBREUX

(30) Priorität: 02.04.2015 EP 15162335
(43) Veröffentlichungstag der Anmeldung: 07.02.2018
(73) Patentinhaber: Evonik Operations GmbH, 45128 Essen (DE)
(72) Erfinder: BERLIN, Mark Reinhard, 73732 Esslingen (DE); SONDERMANN, Udo, 46286 Dorsten (DE)
(74) Vertreter: Evonik Patent Association
(86) Internationale Anmeldenummer: PCT/EP2016/056585
(87) Internationale Veröffentlichungsnummer: WO 2016/156222

(56) Entgegenhaltungen:
- EP-A1- 2 589 475
- CN-B- 102 367 003
- DE-A1-102010 008 100

## Beschreibung

Gegenstand der Erfindung sind ein Verfahren zur Herstellung von Verbundwerkstoffen, indem ein oder mehrere Faserbündel mit einer Schmelze imprägniert werden können. Durch den speziellen Aufbau ist es möglich, verschiedene Fasermaterialien und Fasertypen, auch mit höherer Tex-Zahl (z. B. Heavy Tows), zu verarbeiten. Die Besonderheit ist die Erzielung einer robusten Einzelfaserimprägnierung in einem sehr weiten Viskositätsbereich. Somit lassen sich entgegen der gängigen Lösungen des Standes der Technik auch höherviskose Systeme verarbeiten.

Die Aufspreizung eines Faserbündels bei der Schmelzeimprägnierung ist bekannt. So wird in der EP 0 056 703 A1 ein Verfahren beschrieben, bei dem Verstärkungsfaser-Rovings durch eine Schmelze eines thermoplastischen Kunststoffs gezogen werden, in die mindestens eine beheizte Oberfläche zum Spreizen des Rovings in Form einer beheizten Spreizstange eintaucht. Praktisch sind aber immer mehrere Spreizvorrichtungen erforderlich. Die aufzubringenden Abzugskräfte steigen aber mit der Zahl der Spreizvorrichtungen, mit der Viskosität der Schmelze und mit der Abzugsgeschwindigkeit stark an. Da die daraus resultierenden hohen Abzugskräfte sowie die mechanische Reibung an den Stangen die Verstärkungsfaser schädigen und damit die Eigenschaften des Verbundwerkstoffs verschlechtern, ist das zur Verfügung stehende Arbeitsfenster sehr klein. Es kommt hinzu, dass die Imprägniergüte und damit auch die Qualität der Produkte mit steigender Viskosität der Schmelze und steigender Abzugsgeschwindigkeit abnehmen. Daher führt das Verfahren der EP 0 056 703 A1 nur bei Schmelzeviskositäten bis zu 30 Pas und bei niedrigen Abzugsgeschwindigkeiten (unter 0,3 m/min) zu guten Ergebnissen.

Eine geringe Matrixviskosität ermöglicht eine höhere Imprägnierwirkung. Je höher die Viskosität, umso schlechter die Imprägnierwirkung. Möglichkeiten, diesen Effekt zu mildern, resultieren in Lösungen mit sehr niedrigen Prozessgeschwindigkeiten oder es werden sehr viele Umlenkpunkte verwendet, die eine hohe Faserschädigung verursachen und ebenfalls den Prozess verlangsamen. Einige technische Lösungen verwenden eine runde Umlenkeinheit mit integrierter Düse für den Matrixauftrag, über welche aufgespreizte Faserrovings einzeln oder als Bahnware gezogen werden. Benetzung und Imprägnierung erfolgen hier in einem Schritt. Für sehr einfache Prozesse oder sehr niedrige Matrixviskositäten kann damit eine ausreichende Imprägnierwirkung erzielt werden. Je nach Rollenanordnung ist die Bahngeschwindigkeit begrenzt, da sonst die Faserschädigung zu stark zunimmt oder aber die Imprägnierung zu schwach ist. Dieser Weg ist Gegenstand etlicher Patentanmeldungen; beispielsweise seien die US 4 059 068, die US 5 798 068, die WO 2009/074490, die US 2005/0221085 und die EP 0 397 506 A2 genannt. Alternativ hierzu kann der Auftrag über starre Umlenkpunkte erfolgen (EP 0 415 517 A1).

Auch in EP 2589475 A1 wird ein Verfahren offenbart bei dem ein einzelnes Faserband weiter aufgespreizt wird, um die Dicke zu reduzieren. Das gespreizte Faserband wird durch eine komplett mit Polymer gefüllte Imprägnierkammer gezogen, in der das Faserbündel mehrfach umgelenkt wird. Die Verweilzeit des Polymers in der Imprägnierkammer führt dabei zu einer hohen thermischen Belastung des Polymers.

Die DE 10 2010 008100 A1 offenbart ein Verfahren zum Imprägnieren von Fasersträngen, bei denen mittels mindestens einer Imprägnierrolle ein einzelnes Faserbündel imprägniert wird, indem das Faserbündel durch einen schmalen Spalt transportiert wird.

Demgegenüber besteht die Aufgabe der vorliegenden Erfindung darin, die oben genannten Probleme zu lösen und insbesondere ein Verfahren zur Verfügung zu stellen, bei dem auf einfache Weise ein hoher Imprägnierungsgrad bei geringer Verweilzeit der Schmelze erzielt werden kann, wobei Faserschädigung vermieden und trotzdem eine hohe Abzugsgeschwindigkeit erzielt werden kann. Das Verfahren sollte insbesondere auch bei einer hohen Bandbreite an Fasertypen sowie auch bei höheren Matrixviskositäten zu einer sehr guten Imprägnierqualität führen. Mit sehr guter Imprägnierqualität ist gemeint, dass sehr fein verteilte Einzelfilamentfasern vorliegen, die im Idealfall jede einzeln vollständig mit Matrix umschlossen sind und dass so gut wie keine nicht imprägnierte Filamentbündel oder Filamentnester vorhanden sind. Weiterhin sind auch so gut wie keine Lufteinschlüsse im Produkt vorhanden. Die Imprägnierqualität wird standardmäßig mittels Schliffbildaufnahmen oder REM-Aufnahmen beurteilt.

Diese Aufgabe wird durch ein Verfahren zur Herstellung eines Verbundwerkstoffs gelöst, das eine spezielle Kombination von Benetzungstechnik und weiterer Imprägnierung verwirklicht. Das Verfahren enthält folgende Schritte:
a) Ein oder mehrere Faserbündel werden über eine oder mehrere Spreizvorrichtungen in eine Imprägnierkammer eingezogen, so dass mindestens zwei übereinander liegende, räumlich getrennte und gespreizte Faserbahnen resultieren;
b) über horizontal ausgerichtete Verteilerbalken, die jeweils zwischen zwei Faserbahnen angeordnet sind, wird Schmelze zugeführt;
c) die einzelnen Faserbahnen werden so zusammengeführt, dass sie übereinander liegen und einander kontaktieren;
d) die zusammengeführten Faserbahnen werden am Ende des Werkzeugs durch eine Abzugsdüse gezogen, wobei die erste Formgebung erfolgt.

Das Produkt kann anschließend kalandriert und abgekühlt werden.

Unter "Faserbündel" ist ein Bündel aus einer größeren Zahl von Einzelfilamenten zu verstehen. Üblicherweise sind es mehrere tausend Einzelfilamente. Das Faserbündel kann aus einem Roving oder auch aus einer Mehrzahl an Rovings bestehen; vorzugsweise besteht es aus einem bis maximal 1000 Rovings und besonders bevorzugt aus einem bis maximal 800 Rovings. Diese Rovings werden beim erfindungsgemäßen Verfahren einzeln von Spulen abgewickelt oder abgezogen und vor der Spreizvorrichtung oder am Beginn der Spreizvorrichtung so zusammengeführt, dass sie ein einziges Faserbündel ergeben. Unter "Roving" versteht man hierbei generell ein Bündel von Einzelfilamenten; dieses Bündel kann aus einem einzelnen Fasertyp oder auch aus verschiedenen Fasertypen bestehen. Grundsätzlich sind alle Fasern von ausreichender Länge geeignet; es können anorganische Fasern, Polymerfasern sowie Naturfasern eingesetzt werden. Beispiele geeigneter Fasern sind Metallfasern, Glasfasern (z. B. aus E-Glas, A-Glas, C-Glas, D-Glas, AR-Glas, R-Glas, S1-Glas, S2-Glas usw.), Carbonfasern, metallisierte Carbonfasern, Borfasern, keramische Fasern (z. B. aus Al₂O₃ oder SiO₂), Basaltfasern, Siliciumcarbidfasern, Aramidfasern, Polyamidfasern, Polyethylenfasern, Polyesterfasern (z. B. aus Polybutylenterephthalat), Fasern aus flüssigkristallinem Polyester, Polyacrylnitrilfasern sowie Fasern aus Polyimid, Polyetherimid, Polyphenylensulfid, Polyetherketon, Polyetheretherketon, ferner Cellulosefasern, die mittels des Viskoseverfahrens ersponnen wurden und üblicherweise als Viskosefasern bezeichnet werden, Hanffasern, Flachsfasern, Jutefasern und dergleichen. Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden.

Das Faserbündel wird aufgeweitet und so geführt, dass spätestens beim Schmelzeauftrag mindestens zwei übereinanderliegende Bahnen resultieren. Die Bahnseparation kann im Werkzeug oder auch schon vor dem Werkzeug erfolgen.

In einer bevorzugten Ausführungsform werden mindestens zwei Faserbündel jeweils separat über eine Spreizvorrichtung aufgeweitet und durch separate Öffnungen in eine Imprägnierkammer eingezogen. Damit erhält man direkt zwei räumlich getrennte Faserbahnen.

Zweckmäßigerweise sind die Faserbündel, die Spreizvorrichtungen und die Einzugsöffnungen hierbei übereinander angeordnet, so dass die Faserbahnen nicht umgelenkt werden müssen. In Sonderfällen können die Faserbündel, die Spreizvorrichtungen und die Einzugsöffnungen jedoch auch anders angeordnet sein, so dass die Faserbahnen in die passende Lage umgelenkt werden.

In einer weiteren bevorzugten Ausführungsform werden mindestens zwei Faserbündel jeweils separat über eine Spreizvorrichtung aufgeweitet und durch eine gemeinsame Öffnung in eine Imprägnierkammer eingezogen. Beim Eintreten in die Imprägnierkammer teilen sich die einzelnen Faserbahnen wieder auf. Die Teilung der vorher separierten Bahnen kann durch manuelles Einfädeln im geöffneten Werkzeug erfolgen. Von daher ist ein einfach zu öffnendes, mindestens zweigeteiltes Werkzeug zu bevorzugen.

In einer weiteren Ausführungsform wird ein Faserbündel über eine Spreizvorrichtung aufgeweitet und hierbei oder anschließend durch eine geeignete Vorrichtung in mehrere übereinander liegende, räumlich getrennte und gespreizte Faserbahnen separiert. Allerdings müssen die separierten Faserbahnen hierbei umgelenkt werden. Anschließend werden die Faserbahnen in eine Imprägnierkammer eingezogen. In einer Variante hiervon werden zwei oder mehr Faserbündel jeweils separat über eine Spreizvorrichtung aufgeweitet und hierbei oder anschließend durch eine geeignete Vorrichtung jeweils in mehrere übereinander liegende, räumlich getrennte und gespreizte Faserbahnen separiert, diese umgelenkt und anschließend in eine Imprägnierkammer eingezogen.

Im Rahmen der Erfindung sind auch beliebige Kombinationen dieser verschiedenen Ausführungsformen möglich.

Die Aufspreizung im Verfahrensschritt a) ist abhängig von der Geometrie des Endprodukts. Wenn das Endprodukt ein Tape ist, wird das Faserbündel um einen vergleichsweise hohen Faktor aufgespreizt. Wenn das Endprodukt dagegen relativ dick ist, beispielsweise einen rechteckigen oder quadratischen Querschnitt hat, kann das Faserbündel bezogen auf die Breite des Endprodukts um einen vergleichsweise niedrigen Faktor aufgespreizt werden, so dass keine sinnvolle allgemeingültige Obergrenze angegeben werden kann. Je nach Geometrie des Endprodukts kann eine Aufspreizung vorzugsweise maximal um den Faktor 30, besonders bevorzugt maximal um den Faktor 20, insbesondere bevorzugt maximal um den Faktor 14 und ganz besonders bevorzugt maximal um den Faktor 8 erfolgen, jeweils bezogen auf die ursprüngliche Breite des Faserbündels. Insbesondere bei relativ dicken Endprodukten kann es sinnvoll sein, mehr als zwei übereinander liegende Bahnen zusammenzuführen.

Hierbei ist es bevorzugt, dass die Faserbündel so weit aufgespreizt sind, dass ihre mittlere Dicke dem 1- bis 50-fachen Filamentdurchmesser, besonders bevorzugt dem 1- bis 40-fachen Filamentdurchmesser, insbesondere bevorzugt dem 1,5- bis 35-fachen Filamentdurchmesser und ganz besonders bevorzugt dem 1,8- bis 30-fachen Filamentdurchmesser entspricht. Die Mittelung erfolgt hierbei über die Breite der Faserbahn hinweg. Bei Fasern mit nicht kreisförmigem Querschnitt wird als Filamentdurchmesser die kürzeste Querschnittsachse gewählt. Hinsichtlich des Faserquerschnitts kann den Angaben des Faserherstellers gefolgt werden. Bei einer Mischung verschiedener Fasern wird als Filamentdurchmesser das arithmetische Mittel bezogen auf die Zahl der Einzelfilamente gewählt. Wenn Herstellerangaben nicht verfügbar sind oder bei Fasern gleicher Art mit unterschiedlicher Geometrie, etwa Naturfasern, wird der mittlere Filamentdurchmesser durch eine rasterelektronenmikroskopische Aufnahme (REM-Aufnahme), Ausmessen und Berechnen des arithmetischen Mittels bezogen auf die Zahl der Einzelfilamente bestimmt.

Dem Fachmann sind geeignete Spreizvorrichtungen zum Aufspreizen des oder der Faserbündel bekannt. Beispielsweise verwendet man hierfür mindestens eine Umlenkstange. In der Praxis sind mehrere, etwa zwei, drei oder vier Umlenkstangen hintereinander angeordnet.

Die Matrix des Verbundwerkstoffs kann eine thermoplastische Formmasse, ein Duroplast, ein Thermoplast-Duroplast-Hybridsystem, ein thermoplastisches Elastomer oder ein vernetztes Elastomer sein. Thermoplastische Formmassen bestehen aus einem Thermoplasten als Hauptbestandteil oder alleinigem Bestandteil. Weitere Bestandteile können beispielsweise Stabilisatoren, Verarbeitungshilfsmittel, Pigmente, Flammschutzmittel, andere Thermoplaste als Blendkomponenten, Schlagzähmodifier oder dergleichen sein. Geeignete Thermoplaste sind beispielsweise Polyolefine (wie Polyethylen oder Polypropylen), Polyester (wie Polyethylenterephthalat, Polybutylenterephthalat, Polyarylate oder flüssigkristalline Polyester), Polycarbonat, Polyestercarbonat, Polyamide (wie PA46, PA6, PA66, PA610, PA612, PA1010, PA11, PA12, teilaromatische Polyamide (PPA) oder transparente Polyamide beispielsweise auf Basis von linearen oder verzweigten aliphatischen, cycloaliphatischen oder aromatischen Dicarbonsäuren und Diaminen), Polyarylenetherketone (wie Polyetheretherketon, Polyetherketon oder Polyetheretherketonketon), Polyphenylensulfid, Polyetherimid, Polymethylmethacrylat, Polystyrol, Styrol-Acrylnitril-Copolymere (SAN), Styrol-Acrylnitril-Butadien-Copolymere (ABS), Polyacetal, Polyurethan, Polyimid, Polysulfon, Polyethersulfon, Polyphenylenoxid oder Fluorpolymere (wie PVDF oder ETFE). Der Thermoplast wird üblicherweise als Schmelze aufgebracht. Diese Schmelze kann auch ein Lösungsmittel enthalten, das anschließend wieder entfernt wird. Es kann aber auch stattdessen ein Monomer als Schmelze aufgebracht werden, das dann in situ polymerisiert wird; so kann beispielsweise eine Polyamidmatrix durch anionische Lactampolymerisation erzeugt werden. Eine weitere Variante besteht darin, dass ein Polymer mit vergleichsweise niedrigem Molekulargewicht zusammen mit einem Kopplungsmittel als Schmelze aufgebracht wird und dann während des Imprägniervorgangs und insbesondere danach eine Kettenverlängerung durchgeführt wird.

Geeignete Duroplaste sind beispielsweise ungesättigte Polyesterharze, Epoxidharze, Aminoplaste, Phenoplaste, vernetzte Polyacrylate, Polyurethane, Melaminharze, Vinylesterharze oder Bismaleinimidharze. Die im Verfahrensschritt b) aufgetragene Schmelze ist in diesem Fall ein harz-Härter-Gemisch oder eine sonstige geeignete Vorstufe, etwa ein Präpolymer.

Geeignete thermoplastische Elastomere sind beispielsweise TPE-O (thermoplastische Elastomere auf Olefinbasis, etwa PP/EPDM), TPE-V (vernetzte thermoplastische Elastomere auf Olefinbasis, insbesondere PP/vernetztes EPDM), TPE-U (thermoplastische Elastomere auf Polyurethanbasis), TPE-E (thermoplastische Polyesterelastomere), TPE-S (Styrolblockcopolymere, etwa SBS, SEBS, SEPS, SEEPS oder MBS) sowie TPE-A (Polyamidelastomere).

Geeignete vernetzte Elastomere werden aus einem Kautschukcompound erhalten, das dem Stand der Technik entsprechend ein Vulkanisationsmittel sowie gegebenenfalls Vulkanisationshilfsmittel, Füllstoffe, Öle sowie weitere übliche Zusätze enthält. Beispiele derartiger Elastomere sind EPDM, Styrol/Butadien-Kautschuk, Butylkautschuk, Silikonkautschuk, Epoxidkautschuk, Chloroprenkautschuk, Acrylkautschuk und dergleichen.

Im Rahmen der Erfindung wird der Begriff "Schmelze" für alle, beispielsweise obengenannten, fließfähigen Materialien verwendet, die auf die Faserbündel aufgebracht werden und dann die Matrix ergeben.

Im Verfahrensschritt a) werden mehrere Faserbahnen mit einem sehr geringen Höhenaufbau erzeugt. Ziel ist eine deutliche Reduzierung des Flächengewichts. Das genaue Flächengewicht sowie die Anzahl der Bahnen hängt von dem später gewünschten Produktaufbau und dem verwendeten Matrixmaterial beziehungsweise der Viskosität der Schmelze ab. Vorzugsweise entspricht die Bahnbreite entweder der späteren Produktbreite oder es kann eine höhere Aufspreizung erfolgen, um den Benetzungsvorgang weiter zu erleichtern. Die Faserbahnen laufen zusammen über einen gemeinsamen Einzug oder separat in die Imprägnierkammer ein.

Der Benetzungsvorgang erfolgt nun zwischen den jeweiligen Faserbahnen, wo ein Verteilerquerschnitt den Schmelzeanteil einbringt. Abhängig von den später gewünschten Produkteigenschaften sowie den verwendeten Ausgangsmaterialien können ein oder mehrere Schmelzeverteiler angeordnet werden, die vorzugsweise übereinander angebracht sind. Ein Verteilerbalken wird von einem Extruder oder einer Schmelzepumpe, die einer Plastifiziereinheit nachgeschaltet ist, mit Schmelze versorgt und dosiert das Polymer gleichmäßig über den Bahnquerschnitt. Die gleichmäßige Dosierung erfolgt über den Innenquerschnitt der Auftragsdüse. Die Geometrie der Verteilerdüse sorgt für einen gleichmäßigen Auftrag der Schmelze, indem vorzugsweise über die gesamte Breite der Faserbahnen eine Düsenöffnung oder mehrere nebeneinander angebrachte Düsenöffnungen vorhanden sind. Hier kann ein Bügelverteiler angebracht sein, eine Quellflussverteilergeometrie oder ähnliche Formen, die eine gezielte Dosierung sowie einen gleichmäßigen Auftrag des Schmelzefilms ermöglichen. Solche Verteilerdüsen sind dem Fachmann bekannt. Eine geeignete Quellflussverteilergeometrie ist beispielsweise in der WO 2012/149129 näher beschrieben. Der Verteilerbalken kann beispielsweise einen runden, ovalen, elliptischen, rechteckigen oder rechteckig-gerundeten Querschnitt besitzen.

Im Rahmen der Erfindung kann zusätzlich weitere Schmelze durch eine oder zwei Auftragsdüsen aufgebracht werden, wobei entweder eine Auftragsdüse oberhalb der obersten Faserbahn, eine Auftragsdüse unterhalb der untersten Faserbahn oder jeweils eine Auftragsdüse oberhalb der obersten Faserbahn und unterhalb der untersten Faserbahn angeordnet ist.

Im folgenden Impägnierschritt werden die verschiedenen Bahnen zusammengeführt und durch eine Düse gezogen. Der Kammerbereich zwischen Schmelzeauftrag und Düse kann zur Unterstützung mit einem leichten Schmelzeüberschuss versehen sein. In diesem Bereich legen sich die Faserbahnen zusammen und die aufgebrachte Schmelze dringt in die noch nicht imprägnierten Faserzwischenräume ein. Unterstützt wird dieser Vorgang durch lokale Differenzdrücke, die durch die Zusammenführung im Düsenbereich entstehen können. Die Zusammenführung kann auch im Kammerbereich durch die Kammergeometrie oder durch einen eingebrachten Einsatz in Form einer Querschnittsverjüngung unterstützt werden. In diesem Fall werden die Fasern schon in einer Vorstufe mit Schmelze vorkonsolidiert, die Düse übernimmt dann die restliche Konsolidierung. Wenn das Endprodukt eine Folie ist, wird eher keine Querschnittsverjüngung benötigt; ist es ein Profil, wird der Querschnitt dagegen von einer aufgeweiteten Faserbahn zur Profilform reduziert.

Die Abzugsdüse übernimmt die erste Formgebung und bewirkt eine weitere Imprägnierung der Bahnware. Sie enthält in der Regel keine integrierte Abzugseinrichtung. Der Strang wird üblicherweise vielmehr durch einen direkt nach der Düse angebrachten Abzug oder durch Kalanderwalzen gezogen. Ein derartiger Abzug, beispielsweise in Form von Rollen oder Walzen, sowie Kalander sind Stand der Technik. Hierdurch kann eine weitere Formgebung erfolgen.

In der Figur 1 ist eine Ausführungsform der Anlage dargestellt, bei der eine Aufteilung in zwei übereinander liegende Faserbahnen erfolgt.

In der Figur 2 ist eine weitere Ausführungsform der Anlage dargestellt, bei der eine Aufteilung in drei übereinander liegende Faserbahnen erfolgt.

In der Figur 3 ist eine weitere Ausführungsform der Anlage dargestellt, bei der eine Aufteilung in vier übereinander liegende Faserbahnen erfolgt.

Die Figur 4 zeigt eine Variante des Einzugs der einzelnen Faserbahnen.

Die Figur 5 zeigt verschiedene Ausführungsformen von Verteilerbalken mit unterschiedlichen Verteilerquerschnitten.

In der Figur 6 wird dargestellt, wie der Verteilerbalken positioniert werden kann, um den Schmelzeauftrag zu variieren.

Die Figur 7 zeigt von der Seite gesehen die Zusammenführung der Faserbahnen vor der Abzugsdüse.

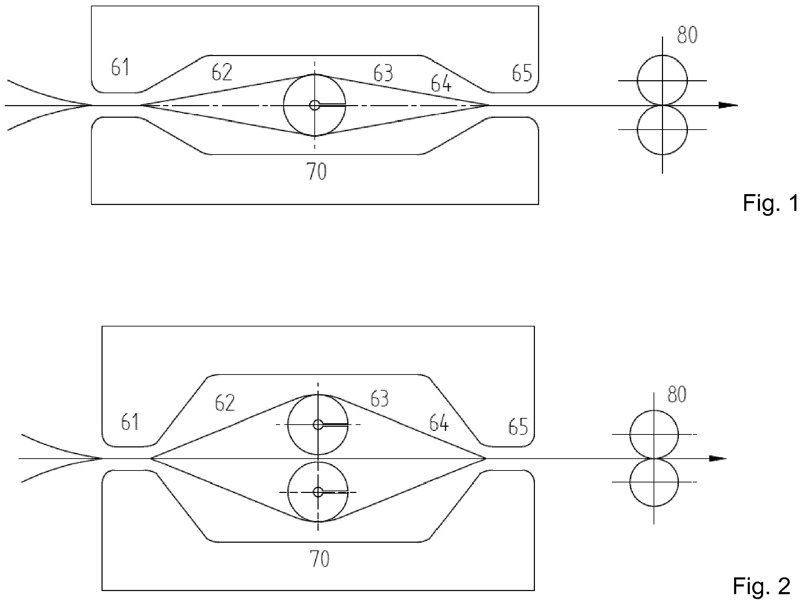

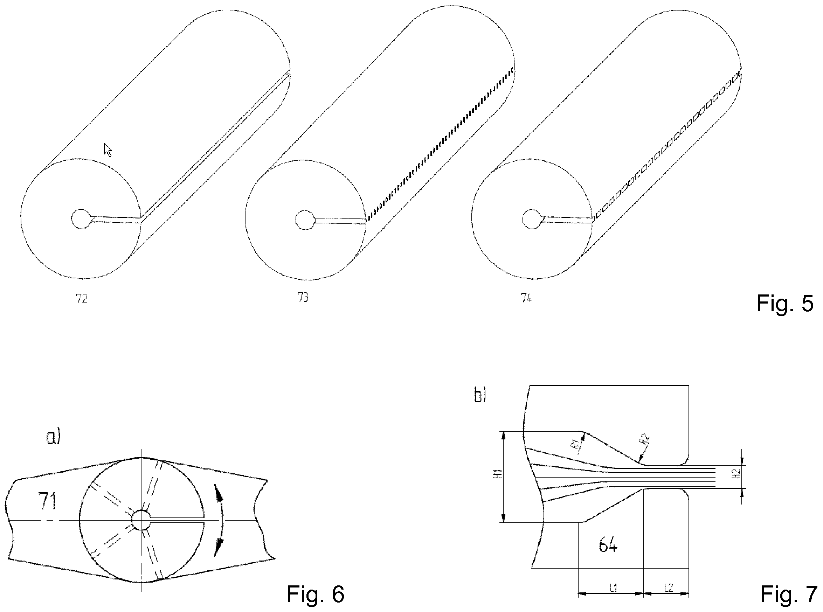

Die Figur 1 zeigt eine einfache Ausführungsform. Das aufgespreizte Faserbündel mit einer vorher definierten Anzahl an Einzelfilamentlagen tritt durch eine Einzugsgeometrie **61** in die Imprägnierkammer **62** ein. In der Imprägnierkammer teilt sich das Bündel vor dem Verteilerbalken **70** und halbiert so seine Filamentlagenanzahl. Der nachfolgende Schmelzeauftrag durch den Verteilerbalken **70** erfolgt zwischen die beiden Teilstränge. Hierbei kann je nach Ausführungsform der Auftrag mittig, an die obere oder an die untere Faserbahn erfolgen (siehe **71** in Figur 5). Durch den mittigen Auftrag wird der notwendige Weg der Schmelze zur vollständigen Durchdringung der Fasern (durch die halbierte Filamentlagenanzahl) zunächst halbiert. Anschließend legen sich die beiden Lagen wieder zu einer Lage zusammen. In der hier gezeigten einfachen Ausführungsform erfolgt dies ohne Unterstützung. Das Werkzeug kann aber auch eine zusätzliche geometrische Ausführung enthalten, welche dieses Zusammenführen bereits im Kammerabschnitt **63** (erster Zusammenführungsbereich) unterstützt. Ein einfaches Beispiel hierfür wären Führungsstäbe oder eine Werkzeugverengung, welche die Lagen zusammenführen (hier nicht dargestellt). Der Konsolidierungsbereich **64** im hinteren Teil der Imprägnierkammer leitet den Übergang ein von der Kammergeometrie zur späteren Formgebung durch den Düsenquerschnitt (siehe auch Figur 6). In der Abzugsdüse **65** erfolgt die Formgebung. Durch den beengten Querschnitt wird nun das Matrixmaterial durch das Faserbett gedrückt. Die kurz vorher entstehende Verjüngung (abhängig von der jeweiligen Endkontur der Düse) führt bei leichtem Schmelzeüberschuss zu einem lokalen Druckanstieg, was die Imprägnierwirkung nun allseitig unterstützt. Die Fasern werden so von oben, unten und mittig von Matrixmaterial durchtränkt und konsolidiert. Weiterhin erfolgt eine ständige Relativbewegung der Einzelfilamente durch das Zusammenführen der Bündel, den Druckaufbau und die Formgebung, was eine vollständige Konsolidierung ermöglicht. Das abgezogene Profil kann zur endgültigen Formgebung noch mittels eines Kalanders **80** kalandriert werden. Der erhaltene Strang wird dann entweder abgekühlt und gewickelt oder auf Länge geschnitten; alternativ hierzu kann er sofort weiterverarbeitet werden, z. B. durch Wickeln um einen Kern und anschließendes Abkühlen (im Fall einer thermoplastischen Matrix) oder anschließendes Aushärten (im Fall einer duroplastischen Matrix).

In der Figur 2 wird eine Ausführungsform gezeigt, bei der das Faserbündel in drei Faserbahnen aufgeteilt wird. Zwischen jeweils zwei Faserbahnen wird durch einen Verteilerbalken Schmelze aufgetragen. Im Übrigen gelten sinngemäß die Ausführungen zur Figur 1.

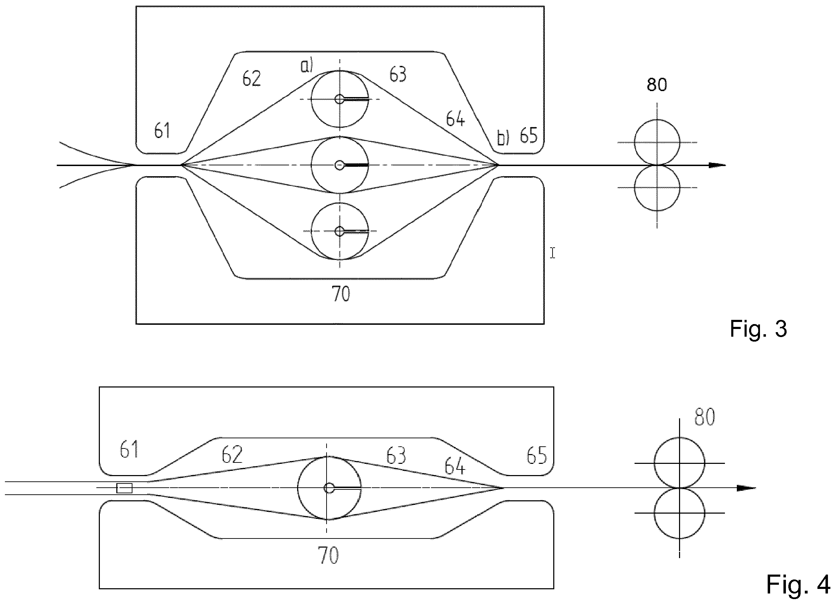

In der Figur 3 wird eine weitere Ausführungsform gezeigt, bei der das Faserbündel in vier Faserbahnen aufgeteilt wird. Zwischen jeweils zwei Faserbahnen wird durch einen Verteilerbalken Schmelze aufgetragen. Im Übrigen gelten sinngemäß die Ausführungen zur Figur 1.

Die Figur 4 zeigt, wie die gespreizten Faserbahnen separat eingezogen werden können, im Unterschied zu den Figuren 1 bis 3, wo die gespreizten Faserbahnen zusammen eingezogen werden und sich dabei kontaktieren.

In der Figur 5 werden unterschiedliche Ausführungsformen des Verteilerbalkens gezeigt, bei denen die Öffnungen an die Viskosität der Schmelze angepasst sind.

In der Figur 6 wird gezeigt, wie je nach Ausführungsform der Schmelzeauftrag durch den Verteilerbalken **71** mittig, an die obere oder an die untere Faserbahn erfolgen kann. Hier wird der Verteilerbalken zugleich als Umlenker und als Faserführung benutzt. Falls die Schmelze in den Raum vordem Verteilerbalken dosiert wird, unterstützt dieser die Imprägnierwirkung durch lokalen Druckaufbau.

Die Figur 7 beschreibt die Zusammenführung der Faserbahnen vor der Abzugsdüse. Je nach Gestaltung des Verjüngungsverhältnisses von Kavitätshöhe zu Düsenhöhe (H1 zu H2), des Verjüngungsgrads, vornehmlich steuerbar über die Länge L1 sowie der Übergangsradien R1 und R2 kann hier ein genaues Druckprofil eingestellt werden. Dies ist für den Konsolidierungsvorgang des Produktes wichtig, da ein langsamer und steuerbarer Druckaufbau ohne Druckspitzen (wie sie bei einer plötzlichen Verjüngung erhalten werden) angestrebt wird. L2 ist die Länge der Abzugsdüse.

Beim erfindungsgemäßen Verfahren wird eine Schmelze aufgetragen, die vorzugsweise eine Viskosität von 10 mPas bis 400 Pas und besonders bevorzugt bis 300 Pas besitzt. Bei Präpolymeren bzw. Harz-Härter-Systemen, die nach Härtung Duroplaste oder Thermoplast-Duroplast-Hybridsystemen ergeben, liegt die Viskosität dabei im unteren Bereich bis hinab zu 10 mPas oder noch tiefer. Bei einer Schmelze aus einer thermoplastischen Formmasse, einem thermoplastischen Elastomer oder einem Elastomercompound beträgt die Viskosität in der Regel mindestens 1 Pas. Unter Viskosität wird erfindungsgemäß die Ruhe-Scherviskosität bei der verfahrensgemäßen Temperatur verstanden, gemessen in einem mechanischen Spektrometer nach ASTM D4400.

Beim Auftragen der Schmelze wird in der Regel ohne Schmelzeüberschuss, insbesondere bei höherviskosen Schmelzen, oder mit nur geringem Schmelzeüberschuss gearbeitet. Beim Arbeiten mit Schmelzeüberschuss baut sich der Überschuss im Bereich zur Düse auf und bildet ein Schmelzebad. Hier muss Vorsorge getroffen werden, dass die überschüssige Schmelze durch eine dafür vorgesehene Öffnung abfließen kann. Das Verhältnis von Fasern zu Schmelze wird so eingestellt, dass der Volumenanteil der Fasern im Fertigteil etwa 10 bis 85 %, bevorzugt 15 bis 80 % und besonders bevorzugt 20 bis 75 % beträgt.

Wenn als Schmelze ein Harz-Härter-System, ein Monomer oder ein Präpolymer aufgetragen wird, findet die Aushärtereaktion im Düsenbereich sowie danach statt. Der Düsenbereich kann hierbei länger ausgeführt sein. Es wird entweder mit mengenmäßig passendem Schmelzeauftrag gearbeitet oder die Düse wirkt als Abstreifer und die Aushärtung erfolgt erst anschließend. Die Temperaturführung muss so gewählt werden, dass die Aushärtung erst ab dem Düsenbereich stattfinden kann. Zur Vervollständigung der Aushärtung wird das Produkt nach dem Abziehen von der Düse gegebenenfalls thermisch nachbehandelt, beispielsweise in einem Ofen.

Die Abzugsgeschwindigkeit ist nach Bedarf einstellbar. Sie liegt vorzugsweise bei 0,1 bis 30 m/min und besonders bevorzugt bei 0,5 bis 25 m/min.

Beim erfindungsgemäßen Verfahren kann der erhaltene Strang jede gewünschte Geometrie besitzen. Er kann beispielsweise eine Folie, ein Tape, eine Platte, ein Rundprofil, ein Rechteckprofil oder ein komplexes Profil sein.

In einer Variante dieses Verfahrens wird der erhaltene Strang, der eine thermoplastische Matrix enthält, zu langfaserverstärktem Stäbchengranulat mit einer Länge von 4 bis 60 mm, vorzugsweise 5 bis 50 mm, besonders bevorzugt 6 bis 40 mm, insbesondere bevorzugt 5 bis 30 mm und ganz besonders bevorzugt 6 bis 25 mm geschnitten. Aus diesem Granulat können dann Formteile mittels Spritzgießen, Extrusion, Pressen oder anderer gebräuchlicher Formgebungsverfahren hergestellt werden, wobei besonders gute Eigenschaften des Formteils mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass bevorzugt Schnecken mit großem Durchmesser und tiefem Kompressionsverhältnis sowie großzügig dimensionierte Düsen- und Angusskanäle zum Einsatz kommen. Ergänzend sollte dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden Formteile erhalten, die im Mittel eine höhere Faserlänge aufweisen als vergleichbare Formteile hergestellt aus kurzfaserverstärkten Formmassen. Hierdurch wird eine deutliche Verbesserung der Eigenschaften, insbesondere beim Zug-E-Modul, der Reißfestigkeit und der Kerbschlagzähigkeit erreicht.

Abhängig von der Schmelzeviskosität und der Filamentlagenanzahl kann das Verfahren in unterschiedlichen Betriebsweisen durchgeführt werden. Dadurch ist es möglich, auch höherviskose Systeme als Matrixmaterial zu verarbeiten. Der deutliche Unterschied zu bisherigen Lösungen ist erfindungsgemäß die gezielte Benetzung im stark aufgespreizten Zustand und die anschließende Imprägnierung der Einzelfasern durch Relativbewegungen in Längs- und Querrichtung. Damit wird eine sehr gute Imprägnierqualität über einen sehr weiten Viskositätsbereich hinweg erzielt, auch bei hoher Abzugsgeschwindigkeit.

### Bezugszeichenliste

- 61: Einzugsbereich
- 62: Imprägnierkammer
- 63: erster Zusammenführungsbereich
- 64: Konsolidierungsbereich
- 65: Abzugsdüse
- 70: Verteilerbalken
- 71: schwenkbarer Verteilerbalken
- 72: Geometrievariante eines Verteilerbalkens
- 73: Geometrievariante eines Verteilerbalkens
- 74: Geometrievariante eines Verteilerbalkens
- 80: Kalander

## Patentansprüche

1. Verfahren zur Herstellung eines Faserverbundwerkstoffs, das folgende Schritte enthält:
a) Ein oder mehrere Faserbündel werden über eine oder mehrere Spreizvorrichtungen in eine Imprägnierkammer (62) eingezogen, so dass mindestens zwei übereinander liegende, räumlich getrennte und gespreizte Faserbahnen resultieren;
b) über horizontal ausgerichtete Verteilerbalken (70), die jeweils zwischen zwei Faserbahnen angeordnet sind, wird Schmelze zugeführt;
c) die einzelnen Faserbahnen werden so zusammengeführt, dass sie übereinander liegen und einander kontaktieren;
d) die zusammengeführten Faserbahnen werden am Ende des Werkzeugs durch eine Abzugsdüse (65) gezogen, wobei die erste Formgebung erfolgt.

2. Verfahren gemäß Anspruch 1, **dadurch gekennzeichnet, dass** im Schritt a) mindestens zwei Faserbündel jeweils separat über eine Spreizvorrichtung aufgeweitet und durch separate Öffnungen in eine Imprägnierkammer eingezogen werden.

3. Verfahren gemäß Anspruch 1, **dadurch gekennzeichnet, dass** im Schritt a) mindestens zwei Faserbündel jeweils separat über eine Spreizvorrichtung aufgeweitet und durch eine gemeinsame Öffnung in eine Imprägnierkammer eingezogen werden.

4. Verfahren gemäß Anspruch 1, **dadurch gekennzeichnet, dass** im Schritt a) ein Faserbündel über eine Spreizvorrichtung aufgeweitet und hierbei oder anschließend durch eine geeignete Vorrichtung in mehrere übereinander liegende, räumlich getrennte und gespreizte Faserbahnen separiert wird.

5. Verfahren gemäß einem der vorhergehenden Ansprüche, **dadurch gekennzeichnet, dass** die Matrix des Verbundwerkstoffs eine thermoplastische Formmasse, ein Duroplast, ein Thermoplast-Duroplast-Hybridsystem, ein thermoplastisches Elastomer oder ein vernetztes Elastomer ist.

6. Verfahren gemäß einem der vorhergehenden Ansprüche, **dadurch gekennzeichnet, dass** im Schritt a) die Faserlage so weit aufgespreizt wird, dass ihre mittlere Dicke dem 1- bis 50-fachen Filamentdurchmesser entspricht.

7. Verfahren gemäß einem der vorhergehenden Ansprüche, **dadurch gekennzeichnet, dass** der erhaltene Strang nach Verlassen der Abzugsdüse (65) kalandriert wird.

8. Verfahren gemäß einem der vorhergehenden Ansprüche, **dadurch gekennzeichnet, dass** der erhaltene Strang zu langfaserverstärktem Stäbchengranulat mit einer Länge von 4 bis 60 mm geschnitten wird.

9. Verfahren gemäß einem der Ansprüche 1 bis 7, **dadurch gekennzeichnet, dass** der erhaltene Strang eine Folie, ein Tape, eine Platte, ein Rundprofil, ein Rechteckprofil oder ein komplexes Profil ist.

## Claims

1. Method for producing a fibre composite material, which includes the following steps:
a) one or more fibre bundles are drawn over one or more spreading devices into an impregnation chamber (62), so that at least two physically separated and spread fibre webs located above one another result;
b) melt is supplied via horizontally aligned distributor beams (70), which are each arranged between two fibre webs;
c) the individual fibre webs are led together such that they lie above one another and contact one another;
d) the fibre webs led together are drawn through a take-off die (65) at the end of the tool, the first shaping being carried out.

2. Method according to Claim 1, **characterized in that** in step a) at least two fibre bundles are each widened separately over a spreading device and drawn into an impregnation chamber through separate openings.

3. Method according to Claim 1, **characterized in that** in step a) at least two fibre bundles are each widened separately over a spreading device and drawn into an impregnation chamber through a common opening.

4. Method according to Claim 1, **characterized in that** in step a) a fibre bundle is widened over a spreading device and, here or hereafter, is separated by a suitable device into multiple physically separated and spread fibre webs located one above another.

5. Method according to one of the preceding claims, **characterized in that** the matrix of the composite material is a thermoplastic moulding compound, a thermosetting plastic, a thermoplastic-thermosetting hybrid system, a thermoplastic elastomer or a cross-linked elastomer.

6. Method according to one of the preceding claims, **characterized in that** in step a) the fibre layer is spread so widely that its average thickness corresponds to 1 to 50 times the filament diameter.

7. Method according to one of the preceding claims, **characterized in that** the strand obtained is calendered after leaving the take-off die (65).

8. Method according to one of the preceding claims, **characterized in that** the strand obtained is cut to form long-fibre reinforced rod-shaped pellets with a length of 4 to 60 mm.

9. Method according to one of Claims 1 to 7, **characterized in that** the strand obtained is a thin sheet, a tape, a board, a round profile, a rectangular profile or a complex profile.

## Revendications

1. Procédé de fabrication d'un matériau composite fibreux, qui contient les étapes suivantes :
a) un ou plusieurs faisceaux de fibres sont insérés par l'intermédiaire d'un ou de plusieurs dispositifs de déploiement dans une chambre d'imprégnation (62), de manière à obtenir au moins deux bandes de fibres superposées, séparées dans l'espace et déployées ;
b) de la masse fondue est acheminée par l'intermédiaire de barres de distribution (70) orientées horizontalement, qui sont respectivement agencées entre deux bandes de fibres ;
c) les bandes de fibres individuelles sont réunies de telle sorte qu'elles soient superposées et en contact l'une avec l'autre ;
d) les bandes de fibres réunies sont tirées à l'extrémité de l'outil au travers d'une buse d'extraction (65), où le premier façonnage a lieu.

2. Procédé selon la revendication 1, **caractérisé en ce que** dans l'étape a), au moins deux faisceaux de fibres sont élargis respectivement séparément par l'intermédiaire d'un dispositif de déploiement et sont insérés au travers d'ouvertures séparées dans une chambre d'imprégnation.

3. Procédé selon la revendication 1, **caractérisé en ce que** dans l'étape a), au moins deux faisceaux de fibres sont élargis respectivement séparément par l'intermédiaire d'un dispositif de déploiement et sont insérés au travers d'une ouverture commune dans une chambre d'imprégnation.

4. Procédé selon la revendication 1, **caractérisé en ce que** dans l'étape a), un faisceau de fibres est élargi par l'intermédiaire d'un dispositif de déploiement et est séparé, alors ou ultérieurement, par un dispositif approprié en plusieurs bandes de fibres superposées, séparées dans l'espace et déployées.

5. Procédé selon l'une quelconque des revendications précédentes, **caractérisé en ce que** la matrice du matériau composite est un matériau de moulage thermoplastique, un thermodurcissable, un système hybride thermoplastique-thermodurcissable, un élastomère thermoplastique ou un élastomère réticulé.

6. Procédé selon l'une quelconque des revendications précédentes, **caractérisé en ce que**, dans l'étape a), la couche de fibres est déployée en une largeur telle que son épaisseur moyenne corresponde à 1 à 50 fois le diamètre filamentaire.

7. Procédé selon l'une quelconque des revendications précédentes, **caractérisé en ce que** le boudin obtenu après la sortie de la buse d'extraction (65) est calandré.

8. Procédé selon l'une quelconque des revendications précédentes, **caractérisé en ce que** le boudin obtenu est découpé en un granulat de bâtonnets, renforcé par des fibres longues, ayant une longueur de 4 à 60 mm.

9. Procédé selon l'une quelconque des revendications 1 à 7, **caractérisé en ce que** le boudin obtenu est une feuille, un ruban, une plaque, un profilé rond, un profilé rectangulaire ou un profilé complexe.
